# EUROPÄISCHE PATENTSCHRIFT

(11) **EP 2 112 502 B1**
(45) Veröffentlichungstag und Bekanntmachung des Hinweises auf die Patenterteilung: **27.02.2013**
(21) Anmeldenummer: 08155029.5
(22) Anmeldetag: 23.04.2008
(51) Int. Cl.: G01N 21/90, B65G 21/20

(54) **Verfahren und Vorrichtung zur Prüfung von Behälter-Preforms**
Method and device for checking preformed containers
Procédé et dispositif de vérification de préformes de récipient

(43) Veröffentlichungstag der Anmeldung: 28.10.2009
(73) Patentinhaber: Finatec Holding AG, 2555 Brügg bei Biel (CH)
(72) Erfinder: Hermle, Matthias, 2562 Port (CH); Maibach, Fridolin, 2560 Nidau (CH)
(74) Vertreter: Scheuzger, Beat Otto

(56) Entgegenhaltungen:
- EP-A- 0 132 150
- EP-A- 0 276 949
- WO-A-01/09593
- DE-U1- 29 707 734
- JP-A- 6 347 408
- JP-A- 9 005 259
- JP-A- 2001 088 207
- US-A- 4 146 467
- US-B1- 6 182 511

## Beschreibung

### Gebiet der Erfindung

Die vorliegende Erfindung betrifft ein Verfahren und eine Vorrichtung zum Prüfen von Preforms (Vorformlingen) auf Herstellungsfehler. Ausserdem bezieht sich diese Erfindung auf eine Vorrichtung zur Ausführung eines Verfahrens.

### Stand der Technik

Bei der Herstellung von Behältern aus Kunststoff, insbesondere von Getränkeflaschen aus PET, werden im allgemeinen zunächst sogenannte Preforms, d.h. Vorformlinge oder Rohlinge, einschliesslich ihres Verschlussgewindes im Spritzguss hergestellt und diese Preforms dann zu den fertigen Behältern weiter verarbeitet. Dazu wird die Preform erwärmt, beispielsweise in einem Infrarotwärmestrahler, und dann in ein Formwerkzeug eingespannt. Anschliessend fährt ein Dorn in die Preform und streckt sie auf die endgültige Länge des Behälters. Dann wird der Formling mit Druckluft in die vorgesehene Endform gebracht, die Form wird gekühlt und dann geöffnet, wonach der fertige Behälter ausgeworfen werden kann.

Weil diese Verarbeitungsvorgänge energieintensiv sind und die verwendeten Maschinen beim Vorliegen defekter Preforms erst stillgesetzt und dann noch gereinigt werden müssen, was einerseits einen Produktionsausfall und andererseits Material-, Energie- und Lohnkosten verursacht, ist es in der Industrie nicht nur erwünscht, sondern erforderlich, dass die als Ausgangsmaterial verwendeten Preforms ohne jeden Fehler sind. Dabei sind folgende Fehler die häufigsten: ungenaue Dimensionen, ovale Form, Material-Fehlstellen (d.h. zu dünne oder zu dicke Wandstellen), Nadellöcher, opake oder kristalline Stellen, nicht geschmolzene Stellen, Anwesenheit von Fremdkörpern und/oder Bläschen, Verfärbungen, Streifen und viele andere mehr.

Aus diesem Grunde sind bereits mehrere Verfahren und Vorrichtungen zur Prüfung der vom Spritzguss kommenden Formlinge und zur Eliminierung defekter Formlinge bekannt geworden. So beschreibt die europäische Patentanmeldung Nr. EP 1 479 454 A1 eine Vorrichtung zur Prüfung der Qual i-tät von Preforms mit einem Kunststoffkörper. Dazu werden die Preforms vor einer optischen Prüfeinrichtung vorbeibewegt, welche ein Abbild jeder Preform aus verschiedenen Winkeln und von unten erzeugt. Sodann wird in jeder Preform während einer vorbestimmten Zeitdauer ein Vakuum erzeugt. Eine elektronische Vorrichtung vergleicht das Abbild mit einem Bezugsbild und stellt fest, ob das erzeugte Vakuum stabil geblieben ist. Nicht konforme Vergleichswerte führen zur Eliminierung des betreffenden Rohlings.

Die veröffentlichte japanische Patentanmeldung Nr. JP 11-100119 betrifft eine Anlage zur Prüfung von Preforms, die mit einem Sternrad durch eine Einrichtung geführt werden, in der ein Vakuum in der Preform erzeugt und diese anschliessend in einer anderen Station fotografiert wird.

Die bekannten Vorrichtungen sind sehr aufwändig konstruiert. Zudem ermöglichen sie es nicht, die gesamte Preform zwecks visueller Inspektion abzubilden, da diese beim Transport durch mechanische Mittel gehalten werden muss und zumindest der von diesen Mitteln abgedeckte Bereich optisch unzugänglich ist. Schliesslich wird bei den bekannten Vorrichtungen die Aufgabe, die als unbrauchbar erkannten Preforms auszusondern, nur mit komplizierten Mitteln gelöst.

Es ist eine Aufgabe der Erfindung, ein Verfahren sowie eine zur Verfahrensdurchführung geeignete Vorrichtung anzugeben, bei denen die Nachteile der bekannten Verfahren und Vorrichtungen überwunden, zumindest aber stark vermindert sind.

Darüber hinaus hat sich die Erfindung zur Aufgabe gestellt, ein Prüf- und Aussortierverfahren und eine Vorrichtung zu dessen Ausführung zu schaffen, bei denen die Prüfung des Formlings im Durchlauf gewährleistet ist, d.h. ohne den Formling bei seinem Durchlauf anhalten zu müssen.

Weiterhin soll eine Rundumsicht des Formlings ermöglicht werden. Dabei soll die gesamte Seitenfläche des Formlings (und auch der Boden) sichtbar sein, einschliesslich des Gewindes für den späteren Behälterverschluss. Die gesamte Mechanik der Vorrichtung soll leicht und schnell auf unterschiedliche Dimensionen der Preform angepasst werden können, und die Vorrichtung soll preisgünstig und einfach herzustellen und zu betreiben sein.

JP2001-088 207 (Abb. 2, 4) stellt den nächstliegenden Stand der Technik dar und offenbart ein Verfahren (und eine Vorrichtung) zur Untersuchung von Preforms 8, wobei diese einzeln und mittels einer Fördereinrichtung 2 an einen luftdurchlässigen Overhead-Conveyor 7 gebracht werden derart, dass die Preforms während ihrer optischen Untersuchung durch abbildende Kameras 41 von der Unterseite des Conveyors 7 hängen. Gemäß dieser Anordnung wird dadurch eine Abbildung der gesamten Fläche der Preform inklusive Mantelseite und Unterseite ermöglicht. Je nach Ergebnis der verarbeiteten Abbildungen wird die Preform durch eine Luftstossvorrichtung 42 vom Conveyor abgelöst bzw. durchgelassen.

In JP2001-088 207 umfasst eine Vorrichtung 4 zur optischen Untersuchung eine Beleuchtungsquelle 41 und eine Mehrzahl von Kameras 41 zur Untersuchung der Preforms mit Licht, wobei die Überprüfung durch die Kameras in Transmissions- bzw. Reflektionsmodus durchgeführt wird. Weiterhin wird das von der Vorrichtung 4 zur optischen Untersuchung ausgelöste Signal entsprechend einer fehlerhaften Preform dazu verwendet, mit genauer zeitlicher Verschiebung die Luftdüse 42 zu aktivieren, damit die entsprechende Preform ausgesondert wird. Die Preforms sind daher, entweder von außen oder von innen, mit Licht beleuchtet.

### Zusammenfassung der Erfindung

Diese Aufgaben werden nun durch das Verfahren gemäß dem Patentanspruch 1 gelöst. Die erfindungsgemässe Vorrichtung bildet den Gegenstand des unabhängigen Patentanspruchs 9. Merkmale besonderer oder bevorzugter Ausführungsformen des Verfahrens bzw. der Vorrichtung sind in abhängigen Ansprüchen niedergelegt.

Aus den Ansprüchen und der nachfolgenden Beschreibung geht hervor, dass die Erfindung wesentliche Vorteile schafft, obgleich die Vorrichtung nicht komplizierter ist als die bekannten Vorrichtungen. Als wichtigsten Vorteil erhält man völlig ganzheitliche Abbildungen jeder Preform, ohne dass irgendwelche Teile der Form von Halterungen verdeckt sind. Dies war bisher bei keiner bekannten Vorrichtung dieser Art möglich.

Weiterhin ergibt sich eine besonders einfache, nicht mehr störungsanfällige Methode, die als fehlerhaft erkannten Preforms von ihrer Transporteinrichtung zu lösen und in einen Sammelbehälter zu überführen; das Ablösen wird dadurch erreicht, dass das Vakuum, welches bisher die Preform am Transportband festgehalten hat, an der Stelle aufgehoben wird, an der sich gerade die als fehlerhaft erwiesene Preform befindet, und diese fällt durch ihre eigene Masse in einen darunter stehenden Sammelbehälter, wird also nicht durch besonders eingerichtete Massnahmen seitlich weggeführt. Dieses Ablösen vom Transportband kann durch einen Luftstrahl unterstützt werden, der in und/oder seitlich auf die betreffende Preform eingeleitet wird.

Der Transport der Preforms, immer mit der Mündung nach oben und allein durch ein Vakuum gehalten, wird durch ein perforiertes Transportband bewirkt, das als "Overhead Conveyor" bezeichnet wird. Dadurch fällt jegliche mechanische Halterung weg, die eine Abbildung der Preform behindern würde.

In der Zeichnung ist nun ganz schematisch eine Ausführungsform der erfindungsgemässen Vorrichtung dargestellt, in welcher das erfindungsgemässe Verfahren ausgeführt werden kann. Die gezeigte Vorrichtung stellt nur ein Beispiel einer von mehreren möglichen Vorrichtungen dar und schränkt daher die Erfindung gemäß den Ansprüchen in keiner Weise ein. Aus der folgenden Beschreibung dieses Beispiels lassen sich auch die einzelnen Schritte des erfindungsgemässen Verfahrens entnehmen.

### Kurzbeschreibung der Zeichnung

In der Zeichnung stellen dar:
- Fig. 1: eine schematische, blockartige Darstellung einer erfindungsgemässen Vorrichtung, von der Seite gesehen, und
- Fig. 2: eine schematische Darstellung der automatischen visuellen Prüfeinrichtung in Aufsicht.

### Beschreibung von Ausführungsformen

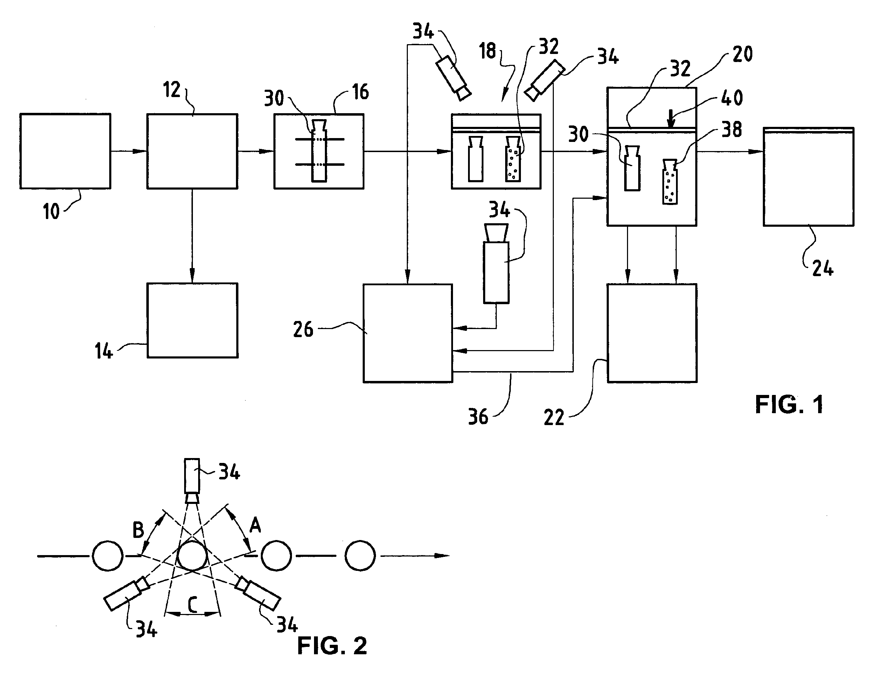

Die in Fig. 1 gezeigte Anlage gestattet die weitgehend automatisierte Prüfung von Preforms 30 mit Aussonderung defekter Preforms 38 und befindet sich normalerweise in der Fabrikationskette von Kunststoffbehältern zwischen der Spritzgussmaschine (bzw. der Druckguss- oder Formpressmaschine) und der Behälter-Endfertigung. Die meisten einzelnen Apparate und Einrichtungen, die anschliessend beschrieben werden, sind als solche, aber in anderer Form bzw. Konstruktion, von bestehenden Anlagen bekannt.

Die Anlage enthält einen Behälter 10 für angelieferte Preforms 30, eine Greifeinrichtung 12 zur Aufnahme von Preforms 30 aus dem Behälter 10 und deren Ausrichtung mit der Mündung nach oben, ein Fördersystem 16, eine Vakuumfördereinrichtung 18 mit Bilderzeugung und -verarbeitung 26, eine Einrichtung 20 zur Aussonderung unbrauchbarer Preforms mit einem Behälter 22 für unbrauchbare Preforms, und einem Behälter 24 für geprüfte und als einwandfrei befundene Preforms 24.

Die zu prüfenden Preforms 30 werden zunächst von einer (nicht dargestellten) Maschine angeliefert, in welcher die Preforms 30 auf an sich bekannte Weise hergestellt werden, beispielsweise im Spritzguss, Druckguss oder durch Formpressen. Dabei bestehen die Preforms 30 aus einem thermoplastischen Kunststoff, und für Getränkeflaschen wird in aller Regel ein Polyethylen verwendet. Von diesem Material sind mehrere Sorten bekannt, die auf die gesundheitliche Unbedenklichkeit geprüft sind.

Die angelieferten Preforms 30 gelangen in einen Sammelbehälter 10, aus dem sie durch eine Einrichtung 12 entnommen werden, welche dazu dient, die Preforms im Hinblick auf den nächsten Verfahrensschritt korrekt zu positionieren. Dazu werden die Preforms nacheinander in einen Bandförderer gebracht, in dem sie senkrecht, mit der Mündung nach oben stehend, in einem bestimmten, vorgegebenen Abstand transportiert werden.

Anschliessend gelangen die Preforms 30 in die Fördereinrichtung 16, durch welche sie zur Vakuumfördereinrichtung 18 befördert werden. Zudem werden die Preforms 30 dank der Fördereinrichtung 16 stabilisiert, d.h. ihre relative Bewegung im Bezug auf die Fördereinrichtung 16 wird eliminiert. Die dazu verwendete Einrichtung kann beispielsweise ein Riemenbandförderer sein. Bei diesem Riemenbandförderer wird die Preform 30 durch zwei untere und einen oberen Riemen derart unterstützt, dass eine Schwingbewegung in seitlicher Richtung (ausgehend von der Senkrechten aus) verunmöglicht wird. So kommen alle Preforms 30 an den Ausgang des Riemenbandförderers 16 perfekt senkrecht ausgerichtet.

Dieser Riemenbandförderer 16 übergibt die von ihm bewegten Preforms 30 eine nach der anderen an einen sogenannten, an sich bekannten und hier nicht näher dargestellten "Overhead Conveyor" 32, ein waagerecht laufendes Förderband mit gummielastischer, weicher Oberfläche, welche mindestens an oder nahe der Mittellinie perforiert ist; auf der Rückseite dieses Förderbandes liegt ein partielles Vakuum an, welches jede Preform nach unten hängend festhält und weiter bewegt.

Dieser Overhead Conveyor 32 ist Bestandteil der optischen Prüfstation 18, in welcher alle anderen Defekte bestimmt werden, die in Preforms 30 vorkommen können, z.B. Abweichungen von der zylindrischen Form, Abweichungen von den vorgegebenen Dimensionen (Durchmesser, Höhe, Gewinde usw.), opake Stellen, nicht geschmolzene Anteile, Verfärbungen, Schlieren usw. Zu diesem Zweck sind Digitalkameras 34 in der Ebene des Förderbandes 32 angeordnet, wie es in Fig. 2 schematisch gezeigt ist. Fig. 2 stellt schematisch eine Aufsicht der optischen Prüfeinrichtung 18 dar, wobei das Förderband 32 selbst nicht gezeigt ist. Es sind in Fig. 2 drei Kameras 34 jeweils in einem Winkel von 120° in der Bildebene versetzt angeordnet. Eine solche Anordnung ermöglicht eine vollständige Abbildung der äusseren Oberfläche der Preforms 30 ohne nicht abgebildete Stellen. Eine solche 100%ige Abbildung wird dadurch erreicht, dass die Preforms 30 ohne jede seitlich oder von unten einwirkende mechanische Halterung vor den Kameras 34 vorbei geführt werden können.

Eine weitere Digitalkamera nimmt das Bild jeder Preform von unten, d.h. von deren Boden, auf. Zudem kann eine weitere Kamera ein Bild der Preforms 30 auch von oben aufnehmen, beispielsweise bei der Übergabe der Preform 30 vom Riemenbandförderer 16 an den Overhead Conveyor 32. In diesem Fall wird klar, weswegen eine Stabilisierung der Preforms 30 durch den Riemenbandförderer 18 essentiell ist. Diese zusätzlichen Kameras sind in der Zeichnung nicht dargestellt.

Die von den Kameras 34 gelieferten Bilder gelangen als elektronische Signale in die elektronische Verarbeitungseinheit 26, in der die Bilder in Form elektronischer Dateien entsprechend verarbeitet werden. Beispielswese können diese elektronischen Dateien mit gespeicherten Bezugsdateien verglichen werden. Wenn das aufgenommene Bild einer Preform 30 nicht mit dem gespeicherten Bild übereinstimmt, gibt die Verarbeitungseinheit 26 über die Leitung 36 ein Befehlssignal an die Einheit 20 zur Aussonderung nicht akzeptierter Preforms 38. In dieser Einheit 20, die sich anordnungsmässig gleich an die Einrichtung 18 anschliesst und auch mit dieser vereinigt sein kann, werden die Preforms 30 weiterhin am Overhead Conveyor 32 weiterbewegt. Das von der Verarbeitungseinheit 26 über die Leitung 36 kommende Signal bewirkt die Aufhebung des Vakuums und das Anlegen eines Luftstrahls durch die Düse 40, wenn sich die betreffende, nicht akzeptierte Preform 38 gerade unter bzw. neben dieser Luftdüse 40 befindet. Der Luftstahl kann also entweder in die fehlerhafte Preform 38 eingeblasen, oder auf deren seitliche Fläche gerichtet werden. Durch den Luftstrahl veranlasst, löst sich die nicht akzeptierte Preform 38 von Overhead Conveyor 32 und fällt durch ihr Eigengewicht in den Auffangbehälter 22 herunter. Alternativ kann statt der Luftdüse 40 auch eine mechanische Stossvorrichtung vorgesehen werden, mittels welcher ein seitliche Kraft auf die fehlerhafte Preform 38 ausgeübt werden kann, wie dies bereits in bekannten Einrichtungen in ähnlicher Weise bekannt ist.

Die nicht brauchbaren Preforms 38, die sich in diesem Auffangbehälter 22 sammeln, gelangen beispielsweise wieder zur Spritzgussmaschine zurück, wo sie ganz oder teilweise als Rohmaterial dienen.

Die Möglichkeit, Preforms durch Bilderzeugung und -verarbeitung zu prüfen und eine darauf beruhende Aussonderung vorzunehmen, ist bereits aus dem Dokument EP 1 479 454 A1 bekannte, bei dem aber die Halterung der Preforms, die vor den Kameras vorbei geführt werden, eine andere ist und auch die Kameras anders angeordnet sind, wodurch keine vollständigen Abbildungen der Preforms erzeugt werden können. Zudem ist bei der dort beschriebenen Anlage eine nachteilige Abfuhr der auszuscheidenden und der akzeptierten Preforms nach der Seite vorgesehen.

Beim erfindungsgemässen Verfahren bzw. bei der entsprechenden Vorrichtung ist es nicht erforderlich, dass die Kameras 34 ortsfest angeordnet sind, obschon diese Lösung am einfachsten zu verwirklichen ist. Die Kameras können so aufgebaut sein, dass sie beim Vorbeilaufen einer Preform 30 eine Schwenkbewegung in der Ebene ausführen und auf diese Weise dem Weg der Preform 30 über eine gewisse Strecke folgen. In diesem Fall kommt man mit zwei Kameras aus. Auch ist es möglich, durch eine entsprechende Konstruktion des oben laufenden Förderbandes 32 eine Drehung der Preform 30 zu bewirken, wenn eine Abbildung aufzunehmen ist. In diesem Falle benötigt man nur eine Kamera 34, und auch die Verarbeitung der Bildsignale einschliesslich des Vergleichs mit einer gespeicherten Datei wird einfacher.

Bei der Verwendung von ortsfesten Kameras zur Aufnahme der Seitenwandung der Preform 30 ist die Kadenz des Riemenförderers 16 und des Overhead-Conveyors 32 derart zu wählen und einzustellen, dass die Digitalkameras 34 jeweils nur eine einzige Preform 30 im Blickfeld haben. Diese Verhältnisse sind in Fig. 2 wiedergegeben. Anderenfalls entstehen nicht eindeutige Bilder.

Bei der Ablichtung der Preform 30 ist es vorteilhaft, eine Beleuchtung anzubringen. Diese ist in der Zeichnung nicht dargestellt. Es ist auch möglich, jede Preform 30 von innen zu beleuchten, indem das Overhead-Vakuumförderband 32 mit entsprechenden kleinen, stiftförmigen Beleuchtungskörpern ausgerüstet wird.

Nach Bedarf kann das Verfahren optimiert werden, indem eine vorgängige Aussortierung grob fehlerhafter Preforms 30 durchgeführt wird. So können die angelieferten Preforms 30 zum Beispiel aus dem Sammelbehälter 10 entnommen und während der Ausrichtung in der Einrichtung 12 auf Defekte überprüft werden. Insbesondere ist es vorteilhaft, dass diese Vorprüfung solche Fehler an den Preforms 30 aussortiert, welche eine Aufhängung nach unten an einer Vakuumeinrichtung beeinträchtigen oder unmöglich machen könnten. Dabei handelt es sich zum Beispiel um eine unregelmässige Endfläche an der Mündung der Preform 30, um ein oder mehrere Löcher in der Wandung, oder um beide Defekte. Beispielsweise kann die Prüfung dadurch geschehen, dass die Preforms 30 mit der Mündung nach unten auf eine sich bewegende Transporteinrichtung aufgesetzt werden, die aus einem porösen oder perforierten Band besteht, dessen Oberfläche gegen die Horizontale geneigt ist, etwa um 30 bis 50°. An der Hinterseite des Bandes liegt ein Vakuum an, das die Preforms ansaugt. Wenn eine Preform nicht dicht ist oder eine unebene Mündungsfläche aufweist, wird die betreffende Preform erst gar nicht vom Vakuum gehalten oder fällt nach kurzer Zeit ab. Diese Aussortierung kann allenfalls auch von Hand durchgeführt werden.

Die Preforms 30, die diese Vorprüfung nicht bestehen, fallen in den Sammelbehälter 14, von wo sie als Rohmaterial der Spritzgussmaschine wieder zugeführt werden können.

Das erfindungsgemässe Verfahren ist nun mit Hilfe des Ausführungsbeispiels einer Anlage zur Inspektion von Preforms 30 und zur Aussonderung fehlerhafter Preforms 38 beschrieben worden. Dieses Verfahren ist im Patentanspruch 1 definiert, und sämtliche Abänderungen, Verbesserungen und auch Vereinfachungen, die sich aus dem Wissen und Können des Fachmanns ergeben, sind im Schutzbereich eingeschlossen.

Beispielsweise ist es möglich, das Verfahren so auszugestalten, dass nicht nur transparente, sondern auch opake und selbst farbige Preforms 30 geprüft und in brauchbare und nicht brauchbare Stücke geschieden werden können. Dazu sind nur die Kameras und die Verarbeitungsprogramme entsprechend einzurichten.

Auch kann man den beschriebenen Doppelriemen-Bandförderer 16 durch eine beliebige andere Fördervorrichtung ersetzen, die den gleichen Zweck erfüllt.

Schliesslich ist es auch im Rahmen der vorliegenden Erfindung möglich, die gezeigten und besprochenen Digitalkameras 34 durch andere, bekannte Bilderzeugungsgeräte zu ersetzen, auch solche, die nicht mit sichtbarem Licht arbeiten.

## Patentansprüche

1. Verfahren zur Prüfung und Aussortierung von Preforms (30) aus Kunststoff, welche zur Herstellung von Kunststoffbehältern, insbesondere Getränkeflaschen, im Blasformverfahren bestimmt sind, wobei die Preforms (30) im Durchlauf auf mechanische und optische Defekte überprüft und defekte Preforms ausgeschieden werden, mit folgenden Schritten:
a) Ergreifen der einzelnen Preforms (30) nacheinander und Förderung mit der Mündung nach oben,
b) Übergabe der Preforms (30) nacheinander an ein rückseitig mit Vakuum beaufschlagtes, perforiertes Overhead-Vakuumförderband (32), an welchem die Preforms (30) an ihrer Mündung und ausschliesslich durch Vakuum gehalten werden und vom Vakuumband (32) nach unten hängen, wobei das Overhead-Vakuumförderband (32) mit entsprechenden kleinen, stiftförmigen Beleuchtungskörpern zur Innenbeleuchtung der Preforms ausgerüstet wird,
c) Herstellung eines Abbilds jeder Preform (30) derart, dass ein Abbild der gesamten Preform (30) ohne abgedeckte Bereiche einsch iesslich des Bodens erhalten wird,
d) Erzeugung einer elektronischen Datei des Abbilds und Verarbeitung dieser elektronischen Datei durch elektronische Datenverarbeitung derart, dass fehlerhafte Preforms (38) entdeckt werden,
e) Erzeugung eines Steuerbefehls zur Eliminierung einer im vorhergehenden Schritt als fehlerhaft befundenen Preform (38),
f) Beeinflussung einer Vorrichtung (20) zur örtlichen Aufhebung des die entsprechende fehlerhafte Preform (38) haltenden Vakuums,
g) Sammeln der vom Overhead-Vakuumförderband labgelöster, nach unten fallenden fehlerhaften Preform (38), wobei
die Preforms (30) bei der Bilderzeugung von innen beleuchtet werden.

2. Verfahren nach Anspruch 1, **dadurch gekennzeichnet, dass** die Preforms (30) aus einem thermoplastischen Kunststoff, insbesondere PET, durch Spritzgiessen, Druckgiessen und/oder Formpressen hergestell werden.

3. Verfahren nach Anspruch 1 oder 2, **dadurch gekennzeichnet, dass** die Abbildung der Umfangswandung jeder Preform (30) abdeckungsfrei durch mindestens zwei Digitalkameras (34) erzeugt wird.

4. Verfahren nach einem der Ansprüche 1 bis 3, **dadurch gekennzeichnet, dass** die Vorrichtungen (34), welche ein Abbild der Wandung der Preform erzeugen, insbesondere Digitalkameras, ortsfest angeordnet werden.

5. Verfahren nach einem der Ansprüche 1 bis 3, **dadurch gekennzeichnet, dass** die Vorrichtungen (34), welche die Wandung der Preform (30) abbilden, um einen kleinen Winkel schwenkbar angeordnet werden.

6. Verfahren nach Anspruch 1 oder 2, **dadurch gekennzeichnet, dass** eine horizontal angeordnete Digitalkamera (34) verwendet und jede F reform (30) vor der Kamera (34) gedreht wird, damit ein lückenloses Bild der Wandung der Preform (30) erzeugt werden kann.

7. Verfahren nach einem der vorstehenden Ansprüche, **dadurch gekennzeichnet dass** das Ablösen einer fehlerhaften Preform (30) vom Vakuumförderband (32) durch Einblasen eines Luftstroms in und/oder seitlich auf die Preform (30) oder durch eine mechanische Stosseinrichtung unterstützt wird.

8. Verfahren nach einem der vorstehenden Ansprüche, **dadurch gekennzeichnet, dass** fehlerhafte Preforms (38) derart entdeckt werden, dass die elektronische Datei des Abbilds mit einer gespeicherten Datei einwandfreier Preforms (30) verglichen wird und/oder dass die elektronische Datei des Abbilds durch einen Fehlersuche-Algorithmus bearbeitet werden.

9. Vorrichtung zur Ausführung des Verfahrens nach einem der vorstehenden Ansprüche, mit einer Einrichtung zur Einzelförderung von Kunststoff-Preforms durch eine Station zur Erstellung von Abbildungen der durchlaufenden Preforms mit einem Overhead-Vakuumförderband (32) und mit einer elektronischen Einheit zur Verarbeitung der Daten der aufgenommenen Bilder der Preforms, zum Vergleich dieser Daten mit gespeicherten Referenzdaten einwandfreier Preforms und zur Beeinflussung einer Vorrichtung zum Aussondern von Preforms, die als fehlerhaft erkannt wurden, umfassend:
a) eine Einrichtung (12) zum Ergreifen der zu prüfenden Preforms (30) einzeln und nacheinander und zum Fördern dieser Preforms (30 mit der Mündung nach oben an dem Overhead-Vakuumförderband.
b) eine Einrichtung (16) zur Übergabe der zu prüfenden Freforms (30) einzeln und nacheinander an das genannte Overhead-Vakuumförderband (32), der zumindest im zentralen, in Laufrichtung verlaufenden Bereich mit Perforationen versehen und mindestens in diesem Bereich, aber auf der Rückseite des Bandes (32), mit einem Vakuum beaufschlagt ist, um die übergebenen Preforms (30) an ihrer Mündung ausschliesslich durch die Vakuum-Saugkraft festzuhalten, wobei das Overhead-Vakuumförderband (32) mit entsprechenden kleinen, stiftförmigen Beleuchtungskörpern zur Innenpeleuchtung der Preforms ausgerüstet ist,
c) Einrichtungen (34) zur Abbildung der gesamten Oberfläche jeder einzelnen Preform (30) einschliesslich des Bodens ohne abgedeckte Bereiche,
d) eine Einrichtung (26) zur Verarbeitung der von den Vorrichtungen (34) zur Bilderzeugung gelieferten Daten und zur Ausgabe von Steue befehlen zur Eliminierung fehlerhafter Preforms (38),
e) eine Einrichtung (20) am Overhead-Vakuumförderband (32 zum Aufheben des Haltevakuums einer als fehlerhaft erkannte Preform (33), wobei Beleuchtungskörper zum Anleuchten der Preform (30) vorgesehen sind, wenn von dieser eine Abbildung herzustellen ist.

10. Vorrichtung nach Anspruch 9, **dadurch gekennzeichnet dass** die Einrichtungen (34) zur Abbildung Digitalkameras sind.

11. Vorrichtung nach Anspruch 10, **dadurch gekennzeichnet, dass** eine Digitalkamera (34) zur Abbildung des Bodens der Preform (30) von unten und mindestens eine zweite Kamera (34) zur Abbildung der Mantelfläche der Preform (30) horizontal angeordnet ist.

12. Vorrichtung nach Anspruch 10, **dadurch gekennzeichnet, dass** drei horizontal angeordnete Kameras (34) vorgesehen sind.

13. Vorrichtung nach Anspruch 9, **dadurch gekennzeichnet, dass** in der Einrichtung (20) eine Düse (40) zur Unterstützung der Ablösung einer fehlerhaften Preform (38) vorgesehen und so angeordnet ist, dass ein Luftstrahl in und/oder seitlich auf die fehlerhafte Preform (38) einleitbar ist.

14. Vorrichtung nach einem der Ansprüche 9 bis 13, **dadurch gekennzeichnet, dass** die Einrichtung (16) gemäss Anspruch 9 ein Riementransportsystem ist.

15. Vorrichtung nach einem der Ansprüche 9 bis 14, **dadurch gekennzeichnet, dass** eine Stossvorrichtung zum Ablösen einer fehlerhaften Preform (38) vom Vakuumförderband (32) vorgesehen ist.

## Claims

1. Method for checking and sorting out preforms (30) of plastic, which are intended for the manufacture, in a blow moulding process, of plastic containers, in particular beverage bottles, the preforms (30) being checked in passage for mechanical and visual defects, and defective preforms being sorted out, with the following steps:
a) Gripping of the individual preforms (30) successively and conveying with the mouth upward,
b) Delivering the preforms (30) successively to a perforated overhead vacuum conveyor belt (32), to which a vacuum is applied on the rear side, on which belt the preforms (30) are held at their mouth and exclusively by vacuum and hang downward from the vacuum band (32), the overhead vacuum conveyor belt (32) being equipped with corresponding small, pin-shaped lighting fixtures for internal illumination of the preforms,
c) Producing an image of each preform (30) in such a way that an image of the entire preform (30) is obtained, including the bottom, without covered areas,
d) Generating an electronic data set of the image and processing of this electronic data set by electronic data processing in such a way that defective preforms (38) are detected,
e) Generating a control command for elimination of a preform (38) found to be defective in the preceding step,
f) Influencing a device (20) for local suspension of the vacuum holding the respective defective preform (38),
g) Collecting the defective preforms (38), falling freely downward, released from the overhead vacuum conveyor belt, whereby
the preforms (30) are illuminated from inside during the image generation.

2. Method according to claim 1, **characterised in that** the preforms (30) are manufactured from a thermoplastic synthetic material, in particular PET, by injection moulding, high-pressure die casting and/or compression moulding.

3. Method according to claim 1 or 2, **characterised in that** the image is generated, by at least two digital cameras (34), of the circumferential walling of each preform (30), free of covering.

4. Method according to one of the claims 1 to 3, **characterised in that** the devices (34) that generate an image of the walling of the preform, in particular digital cameras, are disposed in a stationary way.

5. Method according to one of the claims 1 to 3, **characterised in that** the devices (34) that image the walling of the preform (30) are disposed in a way pivotable about a small angle.

6. Method according to claim 1 or 2, **characterised in that** a horizontally disposed digital camera (34) is used and each preform (30) is rotated in front of the camera (34), so that a complete, uninterrupted image of the walling of the preform (30) is able to be generated.

7. Method according to one of the preceding claims, **characterised in that** the detachment of a defective preform (30) from the vacuum conveyor belt (32) is facilitated by the blowing of an air current into and/or laterally on the preform (30) or by a mechanical pushing device.

8. Method according to one of the preceding claims, **characterised in that** defective preforms (38) are detected in such a way that the electronic data set of the image is compared with a stored data set of flawless preforms (30) and/or **in that** the electronic data set of the image are <sic. is> processed by means of a defect-locating algorithm.

9. Device for carrying out the method according to one of the preceding claims, with a device for individual conveying of plastic preforms through a station for generating images of the preforms passing through by means of an overhead vacuum conveyor belt (32) and with an electronic unit for processing the data of the pictures taken of the preforms, for comparison of these data with stored reference data of flawless preforms and for influencing a device for sorting out preforms that have been recognized as defective, comprising:
a) a device (12) for gripping the preforms (30) to be checked individually and successively and for conveying these preforms (30) with the mouth upward on the overhead vacuum conveyor belt (32),
b) a device (16) for delivering individually and successively the preforms (30) to be checked to the said overhead vacuum conveyor belt (32), which is provided at least in the central area with perforations running in direction of travel and at least in this area, but to which a vacuum is applied on the rear side of the belt (32) in order to firmly hold the delivered preforms (30) at their mouth exclusively by means of the vacuum suction force, the overhead vacuum conveyor belt (32) being equipped with corresponding small, pin-shaped lighting fixtures for internal illumination of the preforms,
c) devices (34) for imaging the entire surface of each individual preform (30), including the bottom, without covered areas,
d) a device (26) for processing the data supplied by the image generation devices (34) and for emission of control commands for eliminating defective preforms (38),
e) a device (20) on the overhead vacuum conveyor belt (32) for suspension of the holding vacuum for a preform (38) recognized as defective, lighting fixtures being provided for illuminating of the preform (30) when an image is to be produced thereof.

10. Device according to claim 9, **characterised in that** the devices (34) for imaging are digital cameras.

11. Device according to claim 10, **characterised in that** a digital camera (34) is disposed for imaging of the bottom of the preform (30) from below and at least one second camera (34) is disposed horizontally for imaging of the lateral surface of the preform (30).

12. Device according to claim 10, **characterised in that** three horizontally disposed cameras (34) are provided.

13. Device according to claim 9, **characterised in that** in the device (20) a jet (40) is provided for assistance in the detachment of a defective preform (38) and is disposed in such a way that a blast of air is able to be discharged in and/or laterally on the defective preform (38).

14. Device according to one of the claims 9 to 13, **characterised in that** the device (16) according to claim 9 is a belt conveyor system.

15. Device according to one of the claims 9 to 14, **characterised in that** a pushing device is provided for detachment of a defective preform (38) from the vacuum conveyor belt (32).

## Revendications

1. Procédé de vérification et triage de préformes (30) en plastique qui sont destinées à la fabrication des récipients en plastique, en particulier des bouteilles de boisson, selon un procédé de soufflage, les préformes (30) étant contrôlées lors du passage pour des défauts mécaniques et optiques, et les préformes défectueuses étant éliminées, comprenant les étapes suivantes :
a) prise des préformes (30) individuelles l'une après l'autre et leur acheminement avec l'embouchure vers le haut,
b) remise des préformes (30) l'une après l'autre à une bande de transport perforée, à manutention en suspendu par le vide, alimentée en vide par derrière (32), à laquelle les préformes (30) sont tenues à leur embouchure et exclusivement par le vide et qui sont suspendues de la bande de transport (32) vers le bas, la bande de transport (32) étant équipée de petits luminaires appropriés en forme de goupille pour l'éclairage intérieur des préformes,
c) production d'une image de chaque préforme (30) de sorte à obtenir une image de la préforme (30) entière, y compris le fond, sans les parties occultées,
d) génération d'un fichier électronique de l'image et traitement de ce fichier électronique par le biais de l'informatique de manière à détecter les préformes défectueuses (38),
e) génération d'une commande de contrôle pour l'élimination d'une préforme (38) détectée comme défectueuse dans l'étape précédente,
f) action sur un dispositif (20) pour la suppression locale du vide tenant la préforme défectueuse (38) correspondante,
g) récupération de la préforme (38) défectueuse détachée de la bande de transport (32) tombant librement vers le bas,
les préformes (30) étant illuminées depuis l'intérieur pendant la génération de l'image.

2. Procédé selon la revendication 1, **caractérisé en ce que** les préformes (30) sont fabriquées par moulage par injection, moulage par pression et/ou moulage par compression en un matériau synthétique thermoplastique, en particulier en PET.

3. Procédé selon la revendication 1 ou 2, **caractérisé en ce que** l'image de la paroi circonférentielle de chaque préforme (30) est générée sans occultation par au moins deux caméras numériques (34).

4. Procédé selon l'une quelconque des revendications 1 à 3, **caractérisé en ce que** les dispositifs (34) qui génèrent une image de la paroi de la préforme, en particulier les caméras numériques, sont disposées de manière fixe.

5. Procédé selon l'une quelconque des revendications 1 à 3, **caractérisé en ce que** les dispositifs (34) qui reproduisent la paroi de la préforme (30) sont disposés de manière à être pivotants d'un petit angle.

6. Procédé selon la revendication 1 ou 2, **caractérisé en ce qu'**une caméra numérique (34) disposée de manière horizontale est utilisée et chaque préforme (30) est pivotée devant la caméra (34) pour qu'une image de la paroi de la préforme (30) sans espaces vides puisse être générée.

7. Procédé selon l'une quelconque des revendications précédentes, **caractérisé en ce que** le détachement d'une préforme (30) défectueuse de la bande de transport à vide (32) est soutenue par le soufflage d'un courant d'air dans et/ou latéralement sur la préforme (30) ou par le biais d'un dispositif de poussée mécanique.

8. Procédé selon l'une quelconque des revendications précédentes, **caractérisé en ce que** les préformes défectueuses (38) sont détectées de sorte que le fichier électronique de l'image est comparé à un fichier enregistré des préformes (30) impeccables et/ou que le fichier électronique de l'image est édité par un algorithme de recherche d'erreurs.

9. Dispositif pour la mise en oeuvre du procédé selon l'une quelconque des revendications précédentes avec un dispositif pour le transport individuel des préformes en matériau synthétique au travers d'une station de génération d'images des préformes passantes avec une bande de transport à manutention en suspendu par le vide (32), avec une unité électronique pour le traitement des données des images prises des préformes, pour la comparaison de ces données avec les données de référence enregistrées des préformes impeccables et pour l'action sur un dispositif pour le tri des préformes qui ont été détectées comme étant défectueuses, comprenant :
a) un dispositif (12) pour la préhension des préformes (30) à contrôler de manière individuelle et l'une après l'autre et pour le transport de ces préformes (30) avec l'embouchure vers le haut à la bande de transport (32),
b) un dispositif (16) pour la remise des préformes (30) à contrôler de manière individuelle et l'une après l'autre à ladite bande de transport (32) qui est, au moins dans la partie centrale disposée dans le sens de la marche, pourvue de perforations et qui est, au moins dans cette partie, mais du côté arrière de la bande (32), munie d'un vide, pour tenir les préformes (30) remises uniquement par la force d'aspiration du vide à leur embouchure, la bande de transport (32) étant équipée de petits luminaires appropriés en forme de goupille pour l'éclairage intérieur des préformes,
c) des dispositifs (34) pour la reproduction de la surface entière de chacune des préformes (30), y compris le fond, sans les parties occultées,
d) un dispositif (26) pour le traitement des données livrées par les dispositifs (34) pour la génération des images et pour l'émission des commandes de contrôle pour l'élimination des préformes (38) défectueuses,
e) un dispositif (20) sur la bande de transport (32) pour la suppression du vide tenant une préforme (38) détectée comme étant défectueuse, les luminaires étant prévus pour l'illumination de la préforme (30) lorsqu'une image de celle-ci est à générer.

10. Dispositif selon la revendication 9, **caractérisé en ce que** les dispositifs (34) pour la reproduction sont des caméras numériques.

11. Dispositif selon la revendication 10, **caractérisé en ce qu'**une caméra numérique (34) pour la reproduction du fond de la préforme (30) depuis le bas et au moins une deuxième caméra numérique (30) pour la reproduction de la paroi de la préforme (30) sont disposées de manière horizontale.

12. Dispositif selon la revendication 10, **caractérisé en ce que** trois caméras (34) disposées de manière horizontale sont prévues.

13. Dispositif selon la revendication 9, **caractérisé en ce qu'**une buse (40) pour le soutien du détachement d'une préforme (38) défectueuse est prévue et disposée de manière à pouvoir introduire un courant d'air dans et/ou latéralement sur la préforme (38) défectueuse.

14. Dispositif selon l'une quelconque des revendications 9 à 13 **caractérisé en ce que** le dispositif (16) selon la revendication 9 est un système de transport par courroie.

15. Dispositif selon l'une quelconque des revendications 9 à 14 **caractérisé en ce qu'**un dispositif de poussée mécanique pour le détachement d'une préforme (38) défectueuse de la bande de transport (32) est prévu.
